# EUROPEAN PATENT APPLICATION

(11) **EP 4 593 132 A1**
(43) Date of publication of application: **30.07.2025**
(21) Application number: 24155685.1
(22) Date of filing: 05.02.2024
(51) Int. Cl.: H01M 10/04, B26D 7/02, H01M 10/0585

(54) **CELL SLITTING METHOD AND SLITTING DEVICE**

(30) Priority: 25.01.2024 JP 2024009204
(71) Applicant: Shenzhen GDlaser Technology Co.,Ltd., Shenzhen, Guangdong (CN)
(72) Inventor: He, Lin, Shenzhen, Guangdong (CN)
(74) Representative: Petraz, Gilberto Luigi

(57) **Abstract**

The present application discloses a cell slitting method and a slitting device. The cell slitting method includes: controlling a pressing plate to tightly press a lamination unit on a cell support table, and controlling the slitting device to slit multiple layers of membranes of the lamination unit according to a pre-set slitting line to obtain m×n independent cell bodies. With respect to the existing slitting device using the mode of cutting off a single cell single-layer tail membrane, according to the present application, the slitting device slits the lamination unit according to a pre-set slitting line such that m×n independent cell bodies can be obtained by simultaneously cutting off multiple layers of membranes, which greatly improves the slitting efficiency and improves the production efficiency of cells.

## Description

### Technical Field

The present application relates to the technical field of lithium batteries, and in particular to a cell slitting method and a slitting device.

### Background Art

In the related art, a cell is a core component of a battery, and a cell of a lithium battery is formed by stacking multiple layers of pole pieces and membranes between the pole pieces. The existing lamination method is that the positive and negative pole pieces are alternately stacked, and the positive and negative pole pieces therebetween need a membrane to isolate the pole pieces. The existing lamination device only places a single pole piece each time when the positive and negative pole pieces are stacked. Therefore, the lamination device can only produce one cell in one production process, making the production efficiency low. Moreover, the laminated cell body needs to cut the membrane to finally form a lithium cell with a certain thickness. Therefore, the existing slitting device uses the method of slitting a single-layer tail membrane of a single cell, and the slitting device only cuts a single-layer tail membrane of a single cell, thus resulting in a low slitting efficiency.

### Summary of the Invention

The embodiments of the present application provide a cell slitting method and a slitting device, aiming to solve the problem of low efficiency of slitting of existing cell bodies.

The present application provides a cell slitting method, the method including:
controlling a pressing plate to tightly press a lamination unit on a cell support table, wherein the lamination unit comprises m×n positive pole pieces and m×n negative pole pieces and a membrane, m×n positive pole pieces and m×n negative pole pieces are alternately stacked on a continuously coated membrane, m×n positive pole pieces and m×n negative pole pieces are distributed according to m rows and n columns, and m×n cell bodies are formed in a stacking direction, wherein m is a positive integer greater than or equal to 1, and n is a positive integer greater than or equal to 2;
and controlling the slitting device to slit multiple layers of membranes of the lamination unit according to a pre-set slitting line to obtain m×n independent cell bodies.

The present application also provides a slitting device applied to the above-mentioned cell slitting method, wherein the slitting device is a cold cutting device, and the cold cutting device comprises:
a machine frame;
a cell support table provided on the machine frame, wherein the cell support table is used for placing a lamination unit;
a positioning mechanism provided on the machine frame, wherein the positioning mechanism comprises a pressing plate, and the positioning mechanism is used for driving the pressing plate to tightly press the lamination unit on the cell support table; and
a cold cutting mechanism provided on the machine frame, wherein the cold cutting mechanism comprises a slitting knife and a translation driving module, and the translation driving module is used for driving the slitting knife to perform a translation movement.

The present application also provides a slitting device applied to the above-mentioned cell slitting method, wherein the slitting device is a thermal cutting device, and the thermal cutting device comprises:
a machine frame;
a cell support table provided on the machine frame, wherein the cell support table is used for placing a lamination unit;
a positioning mechanism provided on the machine frame, wherein the positioning mechanism comprises a pressing plate, and the positioning mechanism is used for driving the pressing plate to tightly press the lamination unit on the cell support table; and
a thermal cutting mechanism provided on the machine frame, wherein the thermal cutting mechanism comprises a thermal cutting wire and a lifting and lowering driving module, and the lifting and lowering driving module is used for driving the thermal cutting wire to perform lifting and lowering movement.

With respect to the existing slitting device using the mode of cutting off a single cell single-layer tail membrane, according to the present application, the slitting device slits the lamination unit according to a pre-set slitting line such that m×n independent cell bodies can be obtained by simultaneously cutting off multiple layers of membranes, which greatly improves the slitting efficiency and improves the production efficiency of cells.

### Brief Description of the Drawings

In order to illustrate the technical solutions in the embodiments of the present application more clearly, the following will briefly introduce the drawings that need to be used in the description of the embodiments. Obviously, the drawings in the following description are some embodiments of the present application. For those of ordinary skills in the art, other drawings can be obtained according to these drawings without involving inventive efforts.
Fig. 1 is a schematic flow diagram of the steps of a cell slitting method according to an embodiment of the present application;
Fig. 2 is a schematic view of a cell slitting method using a cold cutting device for slitting according to an embodiment of the present application;
Fig. 3 is a schematic view of a cell slitting method using a cold cutting device for slitting according to another embodiment of the present application;
Fig. 4 is a schematic view of a cell slitting method using a thermal cutting device according to an embodiment of the present application;
Fig. 5 is a schematic view of a cell slitting method using a thermal cutting device according to another embodiment of the present application;
Fig. 6 is a schematic front view of a cold cutting device according to an embodiment of the present application;
Fig. 7 is a schematic top view of a cold cutting device according to an embodiment of the present application;
Fig. 8 is a schematic three-dimensional view of a cold cutting device according to an embodiment of the present application;
Fig. 9 is a schematic front view of a thermal cutting device according to an embodiment of the present application;
Fig. 10 is a schematic top view of a thermal cutting device according to an embodiment of the present application;
Fig. 11 is a schematic three-dimensional view of a thermal cutting device according to an embodiment of the present application;
Fig. 12 is an enlarged view of part A of Fig. 10; and
Fig. 13 is an enlarged view of part B of Fig. 10.

### Detailed Description of the Invention

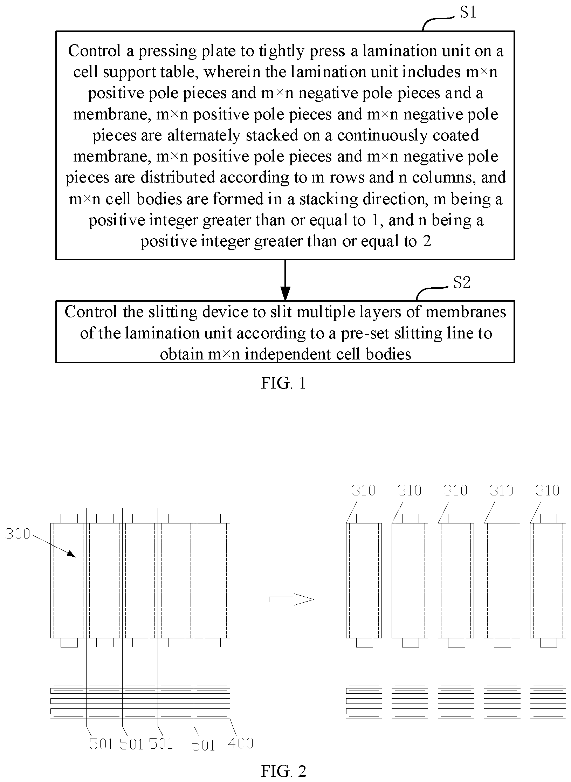

Referring to Fig. 1, Fig. 1 is a schematic flow diagram of the steps of a cell slitting method provided by an embodiment of the present application. The cell slitting method includes steps S1 to S2.

S1, control a pressing plate to tightly press a lamination unit 300 on a cell support table, wherein the lamination unit 300 includes: m×n positive pole pieces and m×n negative pole pieces and a membrane 400; the m×n positive pole pieces and the m×n negative pole pieces are alternately stacked on the continuously-coated membrane 400, and the m×n positive pole pieces and the m×n negative pole pieces are distributed according to m rows and n columns; and m×n cell bodies 310 are formed in the stacking direction, wherein m is a positive integer greater than or equal to 1, and n is a positive integer greater than or equal to 2.

In the present embodiment, the lamination unit 300 is a one-piece unit composed of multiple connected cell bodies 310 formed by alternately stacking positive pole pieces and negative pole pieces on a continuously-coated membrane 400. The process of obtaining the lamination unit 300 is as follows: the membrane assembly covers the first layer of the membrane 400 on a lamination table; m×n positive pole pieces are simultaneously placed on the first layer of the membrane 400 according to m rows and n columns; the membrane assembly covers the second layer of the membrane 400 on the m×n positive pole pieces; m×n negative pole pieces are simultaneously placed on the second layer of the membrane 400 according to m rows and n columns, so as to complete one lamination of the positive pole piece and the negative pole piece; and the above-mentioned steps of laminating the positive pole piece and the negative pole piece are repeatedly performed until a pre-set number of stacked layers is reached to finally obtain the lamination unit 300. The membrane 400 is continuously coated in a z-shaped manner by a membrane assembly, positive pole pieces and negative pole pieces on the upper and lower sides of each layer of the membrane 400 are correspondingly stacked, and the positive pole pieces and the negative pole pieces are separated by the membrane 400. In the stacking direction, the positive pole pieces and the negative pole pieces stacked at the same position and multiple layers of membranes 400 separating the positive pole pieces and the negative pole pieces together constitute one cell body 310. Then, since the positive pole pieces and the negative pole pieces are stacked in m rows and n columns, one lamination unit 300 is composed of m×n cell bodies 310 distributed in m rows and n columns. It needs to be noted that m is a positive integer greater than or equal to 1, and n is a positive integer greater than or equal to 2. Then, there may be multiple patterns distributed in m rows and n columns. Illustratively, the m rows and n columns may be one row and five columns, i.e. five cell bodies 310 are spaced transversely in parallel. Illustratively, the m rows and n columns may be two rows and three columns, i.e. they are slit into two rows, with three cell bodies 310 spaced in parallel in each row, for a total of six cell bodies 310.

The cell support table is used to place the lamination unit 300. The lamination unit 300 lies flat on a flat plane of the cell support table. The lamination unit 300 is tightly pressed by a pressing plate, so that the lamination unit 300 is closely adhered to the cell support table, so as to realize the tight pressing and positioning of the lamination unit 300, thereby avoiding deviation during the slitting of the slitting device, and reducing the defect rate and improving the reliability.

S2, control the slitting device to slit multiple layers of membranes 400 of the lamination unit 300 according to a pre-set slitting line so as to obtain m×n independent cell bodies 310.

In this embodiment, the slitting device is a device for trimming a one-piece lamination unit 300 into multiple independent cell bodies 310. The pre-set slitting line is set according to the stacking arrangement of the lamination units 300, that is, the pre-set slitting line is set according to the distribution of m rows and n columns. The pre-set slitting line is set according to the gap between the left and right adjacent or the upper and lower adjacent cell bodies 310, for example, the distance of the gap is D, and the pre-set slitting line is located at a position of 1/2D.

In a specific embodiment, when m=1, i.e. there is only one row of cell bodies 310, and the pre-set slitting line includes j vertical slitting lines 501 between left and right adjacent cell bodies 310, wherein j=n-1. Specifically, when there is only one row of cell bodies 310, there is only a vertical slitting line 501, one row of cell bodies 310 is arranged in parallel and spaced apart, and one vertical slitting line 501 is arranged between each two left and right adjacent cell bodies 310. Therefore, when there are n electrical core bodies 310, there are j vertical slitting lines 501, i.e. j=n-1. For example, when there are five side-by-side spaced cell bodies 310, there are four vertical slitting lines 501.

In another specific embodiment, m is an integer greater than 1, namely, there are at least two rows of cell bodies 310, and the pre-set slitting lines include k transverse slitting lines 502 between upper and lower adjacent cell bodies 310, wherein k=m-1. Specifically, when there are at least two rows of cell bodies 310, the pre-set slitting lines are not only vertical slitting line 501 but also transverse slitting line 502, and one transverse slitting line 502 is provided between each upper and lower adjacent rows of cell bodies 310. Therefore, with m row of core bodies 310, there are k transverse slitting lines 502, i.e. k=m-1. For example, if two rows of cell bodies 310 are provided, one transverse slitting line 502 is provided. The vertical slitting line 501 is used to slit the membrane 400 between two left and right adjacent cell bodies 310, and the transverse slitting line 502 is used to slit the membrane 400 between two upper and lower rows of cell bodies 310. It needs to be noted that, when there are at least two rows of cell bodies 310, the vertical slitting line 501 extends downward from between the left and right adjacent two cell bodies 310 of the first row to between the left and right adjacent two cell bodies 310 of the next row. The transverse slitting line 502 is provided between the upper and lower two rows of the cell bodies 310, extends transversely from one side of the lamination unit 300 to the other side, and intersects with each vertical slitting line 501.

The slitting device can be a cold cutting device 100 and can also be a thermal cutting device 200. The slitting device has a cutting component that travels according to a pre-set slitting line and travels from a starting point of the pre-set slitting line to an ending point of the pre-set slitting line, so as to slit a one-piece lamination unit 300 into multiple independent cell bodies 310 and complete the slitting of the lamination unit 300.

It needs to be noted that the number of cutting components of the slitting device may be one or more. When the number of the cutting components is one, the situation may be that one cutting component cuts back and forth according to the pre-set slitting line. For example, the pre-set slitting line comprises four vertical slitting lines 501, and then one cutting component may start to cut from the first vertical slitting line 501, and cut the second vertical slitting line 501 after completing the cut of the first vertical slitting line 501, until it completes the cut of the four vertical slitting lines 501. When the number of the cutting components is plural, the situation may be that multiple cutting components simultaneously cut at one time according to a pre-set slitting line. For example, the pre-set slitting line comprises four vertical slitting lines 501, there are four cutting components, and the four cutting components simultaneously cut the corresponding four vertical slitting lines 501 respectively such that the cut of all the pre-set slitting lines can be completed at one time without multiple back and forth cuts.

It further needs to be noted that, with respect to the conventional slitting device that cuts the single cell single-layer trail membrane 400, the present embodiment is due to the special lamination structure of the lamination unit 300, in which the cutting component cuts from the middle of the continuously coated multilayer of the membrane 400, instead of a cut of the single-layer trail membrane 400, so that the cutting component can slit multiple layers of the membrane 400 at once, greatly improving the slitting efficiency with respect to the manner of the cut of the single-layer trail membrane 400.

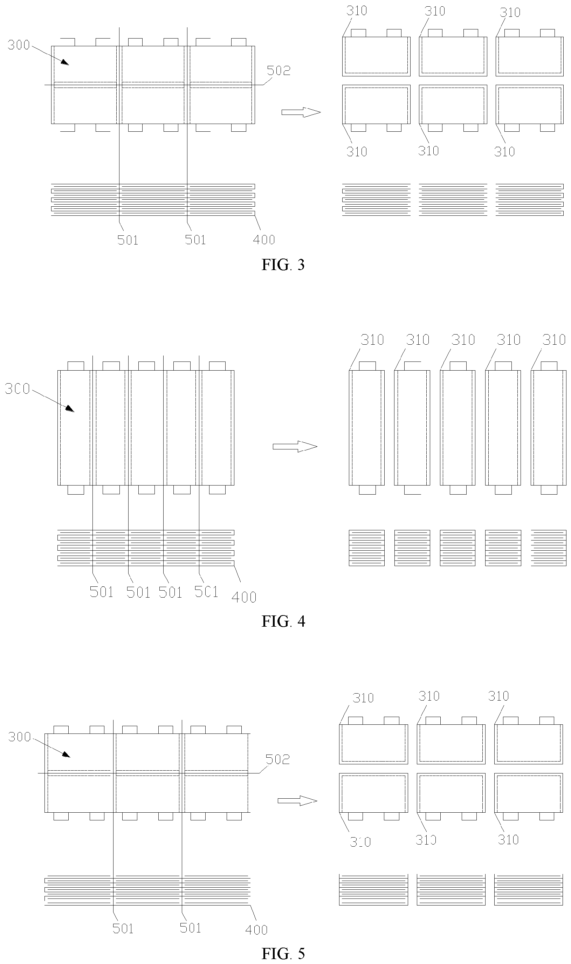

With this embodiment, firstly, the lamination unit 300 is tightly pressed onto the cell support table by a pressing plate for positioning, and then the lamination unit 300 is slit by a slitting device according to a pre-set slit line, so that multiple layers of membranes 400 between multiple connected cell bodies 310 in the lamination unit 300 can be slit at the same time, and multiple independent cell bodies 310 can be obtained, which greatly improves the slitting efficiency, realizes the manufacture of multiple cells at the same time, and greatly improves the production efficiency of the cells. Referring to Figs. 2 and 3, in one embodiment, when the slitting device is a cold cutting device 100, the step S2 includes: controlling a slitting knife of the cold cutting device 100 to cut multiple layers of membranes 400 from one side edge of the lamination unit 300 to the other side edge of the lamination unit 300 in translation along the pre-set slitting line so as to slit the lamination unit 300 into m×n independent cell bodies 310. Specifically, the cold cutting device 100 is a device that mechanically cuts with a cutter, and the cold cutting device includes a slitting knife, which may be a saw-toothed rotating blade. Of course, it could be understood that other configurations are possible and are not limited herein. The slitting knife, by means of a translational cut, travels from one side in the horizontal direction of the lamination unit 300, namely, one side of the positive pole lug, to the vertical slitting line 501, translates along the vertical slitting line 501, and travels until the other side in the horizontal direction of the lamination unit 300 and comes out, namely, one side of the negative pole lug. Alternatively, it travels from the left side in the horizontal direction of the lamination unit 300 to the transverse slitting line 502, translates along the transverse slitting line 502, and travels until the right side in the horizontal direction of the lamination unit 300 and comes out. The number of the slitting knives may be one or more, and the number of the slitting knives in the present embodiment may be more. When m=1, i.e. there is only one row of cell bodies 310, the number of slitting knives is j, each slitting knife correspondingly cuts one vertical slitting line 501, and multiple slitting knives simultaneously perform a translational movement to cut the lamination unit 300, so that multiple layers of membranes 400 of multiple connected cell bodies 310 can be slit at once, thereby obtaining multiple independent cell bodies 310, and improving the slitting efficiency. When m is an integer greater than 1, that is to say, there are at least two rows of cell bodies 310, the number of slitting knives is k+j, j slitting knives correspondingly cut j vertical slitting lines 501, and k slitting knives correspondingly cut k transverse slitting lines 502. Firstly, j slitting knives simultaneously perform translation movement to slit j vertical slitting lines 501, and then k slitting knives perform translation movement to cut k transverse slitting lines 502. It is possible to slit multiple layers of membranes 400 of multiple connected cell bodies 310 at once so as to obtain multiple independent cell bodies 310, and improve the slitting efficiency.

In another embodiment, after step S2, the following step is further included: S3, packaging the membrane 400 on the side margin of the cell body 310. Specifically, since multiple layers of membranes 400 are simultaneously cut when the cold cutting device 100 slits the lamination unit 300, the incisions of the membranes 400 at the side margins of the obtained independent cell bodies 310 are open, and thus further packaging is required. In particular, a hot pressing packaging process may be used. Of course, it could be understood that other packaging processes are possible and are not limited.

Referring to Figs. 4 and 5, in one embodiment, when the slitting device is a thermal cutting device 200, the step S2 includes: controlling the thermal cutting wire of the thermal cutting device 200 to move from the lower side of the lamination unit 300 up to the upper side of the lamination unit 300 along the pre-set slitting line to cut multiple layers of membranes 400 to slit the lamination unit 300 into m×n independent cell bodies 310. Specifically, the thermal cutting device 200 is a device that uses high-temperature cut, and the thermal cutting device 200 includes a thermal cutting wire, which is a long wire-like component that can be heated to a high temperature for cuts. Of course, it could be understood that other configurations are possible and are not limited herein. The length of the thermal cutting wire is greater than the length of a pre-set slitting line, and the thermal cutting wire is arranged along the pre-set slitting line. For example, if the pre-set slitting line is a vertical slitting line 501, the thermal cutting wire is arranged along the vertical direction and is directly above or directly below the vertical slitting line 501. Similarly, for example, if the pre-set slitting line is the transverse slitting line 502, then the thermal cutting lines are arranged in the transverse direction, either directly above or directly below the transverse slitting line 502. The thermal cutting wire, in an up-down and lifting-lowering cut manner, moves upward from the lower side in the vertical direction of the lamination unit 300 and passes through the vertical slitting line 501 or the transverse slitting line 502 and moves up to the upper side in the vertical direction of the lamination unit 300 to come out. Or it adopts the manner from top to bottom, which is not limited herein. The number of the thermal cutting wires may be one or more, and the number of the thermal cutting wires of the present embodiment is plural. When m=1, that is to say, when there is only one row of cell bodies 310, the number of thermal cutting wires is j, each thermal cutting wire correspondingly cuts one vertical slitting line 501, and multiple thermal cutting wires simultaneously perform lifting and lowering movement to cut the lamination unit 300; and multiple layers of membranes 400 of multiple connected cell bodies 310 can be slit at once so as to obtain multiple independent cell bodies 310, and the slitting efficiency is improved. When m is an integer greater than 1, that is to say, there are at least two rows of cell bodies 310, the number of thermal cutting wires is k+j; and j thermal cutting wires correspondingly cut j vertical slitting lines 501, k thermal cutting wires correspondingly cut k transverse slitting lines 502. Firstly, j thermal cutting wires simultaneously perform lifting and lowering movement to slit j vertical slitting lines 501, and then k thermal cutting wires simultaneously perform lifting and lowering movement to slit k transverse slitting lines 502. It is possible to slit multiple layers of membranes 400 of multiple connected cell bodies 310 at once so as to obtain multiple independent cell bodies 310, and improve the slitting efficiency.

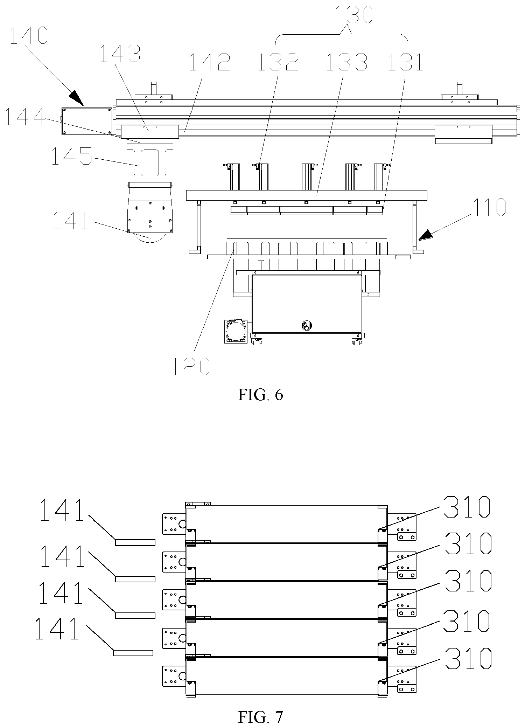

Referring to Figs. 6 to 8, an embodiment of the present invention also provides a slitting device that can be used in the slitting method for a cell of the above-described embodiments. The slitting device is a cold cutting device 100, including: a machine frame 110, a cell support table 120, a positioning mechanism 130, and a cold cutting mechanism 140. The cell support table 120 is provided on the machine frame 110, wherein the cell support table 120 is used for placing a lamination unit 300; the positioning mechanism 130 is provided on the machine frame 110, wherein the positioning mechanism 130 comprises a pressing plate 131, and the positioning mechanism 130 is used for driving the pressing plate 131 to tightly press the lamination unit 300 on the cell support table 120; and the cold cutting mechanism 140 is provided on the machine frame 110, the cold cutting mechanism 140 includes a slitting knife 141 and a translation driving module, wherein the translation driving module is used for driving the slitting knife 141 to perform a translation movement.

Specifically, the cell support table 120, the positioning mechanism 130, and the cold cutting mechanism 140 are all provided on the machine frame 110. The machine frame 110 serves as a supporting component to support each functional mechanism. The positioning mechanism 130 is located above the cell support table 120, the positioning mechanism 130 comprises a pressing plate 131 and an air cylinder 132, the machine frame 110 comprises a gantry 111 arranged above the cell support table 120, the air cylinder 132 is fixed on the gantry 111, the gantry 111 supports the air cylinder 132 with a certain height distance from the cell support table 120, the pressing plate 131 is connected to a movable end of the air cylinder 132, and the movable end of the air cylinder 132 extends and retracts towards the cell support table 120 to drive the pressing plate 131 to press down or retract. The number of pressing plates 131 is the same as the number of cell bodies 310 in the lamination unit 300; multiple pressing plates 131 are connected together via a connecting plate 133; the air cylinder 132 drives the synchronous movement of each pressing plate 131 by driving the connecting plate 133; each pressing plate 131 presses one cell body 310 correspondingly; and a gap is left between adjacent pressing plates 131 so as to avoid interference with the slitting of the slitting device. By driving the air cylinder 132 to extend out, the pressing plate 131 is driven to press down, the pressing plate 131 presses the corresponding cell body 310 tightly on the cell support table 120, and each cell body 310 is correspondingly provided with one pressing plate 131 to press and position the same; and when the slitting device is slitting, since each cell body 310 is pressed by the pressing plate 131, the cell body 310 is kept fixed, so that the slitting device can align with a pre-set slitting line to perform slitting, avoiding deviation during slitting, reducing a defect rate and improving reliability.

In one embodiment, the translation driving module comprises a sliding rail 142 and a sliding seat 143, multiple the slitting knives 141 are mounted on the sliding seat 143, and the sliding seat 143 slides along the sliding rail 142 to drive the slitting knives 141 to translate. Specifically, the sliding rail 142 is provided above the gantry 111, and a sliding seat 143 is mounted on the sliding rail 142, and the sliding seat 143 is driven by a motor so that the sliding seat 143 can slide along the sliding rail 142. Multiple slitting knives 141 are mounted on the sliding seat 143 via a connecting seat 144, and the connecting seat 144 extends downward with multiple connecting portions 145, each connecting portion 145 being correspondingly connected to one slitting knife 141, so that the slitting knife 141 can extend to the lower side cut edge of the slitting knife 141 and locate at the upper surface of the cell support table. At that, the lamination unit 300 pressed tightly against the cell support table can be cut. It needs to be noted that multiple slitting knives 141 are spaced apart, and each slitting knife 141 is located just at a gap between adjacent gantries 111 without being interfered with by the gantries 111. The distance between adjacent slitting knives 141 is fixed, and the distance between two adjacent slitting knives 141 is equal to the distance between pre-set slitting lines. For example, there are two pre-set slitting lines, and the number of the slitting knives 141 is two. The distance between the two pre-set slitting lines is 10mm, then the distance between the two slitting knives 141 is also 10mm, and the two remain corresponding to each other. As shown in Fig. 7, the pre-set slitting lines in the present embodiment are four vertical slitting lines 501, and the slitting knives 141 are also provided with four; when slitting is performed, firstly, the air cylinder 132 drives the four pressing plates 131 to press down, respectively tightly pressing the connected four cell bodies 310 of the lamination unit 300; the motor drives the sliding seat 143 to slide along the sliding rail 142; the slitting knives 141 translate forward from the gap between adjacent gantries 111; and specifically, the sliding seat 143 drives the four slitting knives 141 to travel from one side of the horizontal direction of the lamination unit 300, namely, one side of the positive pole lug, to the vertical slitting line 501, translates along the vertical slitting line 501 and travels until the other side of the horizontal direction of the lamination unit 300, i.e. one side of the negative pole lug, and comes out. Therefore, the translation movement of the plurality of slitting knives 141 is achieved while multiple layers of membranes 400 of the connected cell bodies 310 are cut, thereby improving the slitting efficiency.

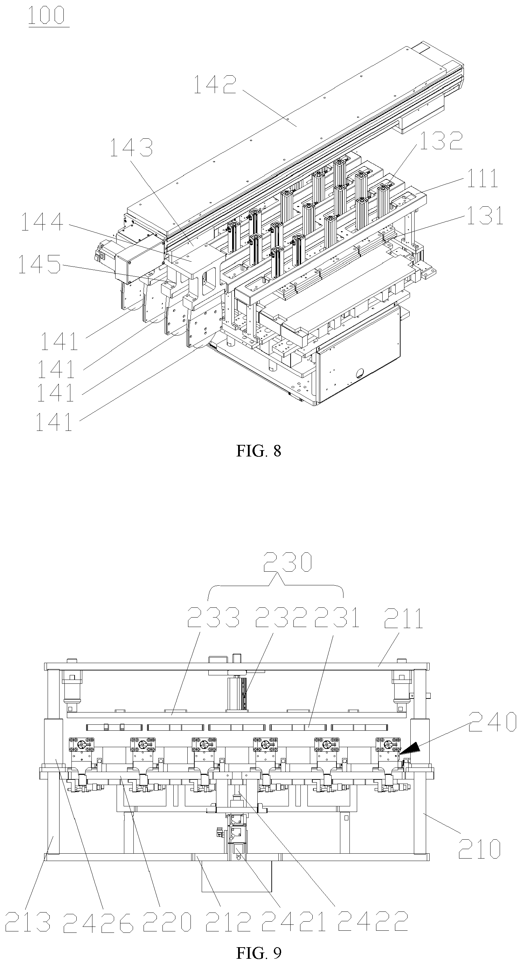

Referring to Figs. 9 to 13, another embodiment of the present invention also provides a slitting device that can be used in the slitting method for a cell of the above-described embodiments. The slitting device is a thermal cutting device 200, including: a machine frame 210, a cell support table 220, a positioning mechanism 230, and a thermal cutting mechanism. The cell support table 220 is provided on the machine frame 210, wherein the cell support table 220 is used for placing a lamination unit 300; the positioning mechanism 230 is provided on the machine frame 210, wherein the positioning mechanism 230 comprises a pressing plate 231, and the positioning mechanism 230 is used for driving the pressing plate 231 to tightly press the lamination unit 300 on the cell support table 220; and the thermal cutting mechanism 240 is provided on the machine frame 210, and the thermal cutting mechanism 240 includes a thermal cutting wire 243 and a lifting and lowering driving module, wherein the lifting and lowering driving module is used for driving the thermal cutting wire 243 to perform lifting and lowering movement.

Specifically, the cell support table 220, the positioning mechanism 230, and the thermal cutting mechanism are all provided on the machine frame 210. The machine frame 210 serves as a supporting component to support each functional mechanism. The positioning mechanism 230 is located above the cell support table 220, and the positioning mechanism 230 comprises a pressing plate 231 and an air cylinder 232. The machine frame 210 is a support frame of a rectangular body as a whole, the upper side of the support frame is provided with a bracket upper plate 211, the lower side of the support frame is provided with a bracket bottom plate 212, the air cylinder 232 is fixed on the bracket upper plate 211, the cell support table 220 is provided in the support frame, the cell support table 220 is plate-shaped, the air cylinder 232 is at a certain height distance from the cell support table 220, the pressing plate 231 is connected to a movable end of the air cylinder 232, and the movable end of the air cylinder 232 extends and retracts towards the cell support table 220 to drive the pressing plate 231 to press down or retract. The number of pressing plates 231 is the same as the number of cell bodies 310 in the lamination unit 300; multiple pressing plates 231 are connected together via a connecting plate 233; the air cylinder 232 drives the synchronous movement of each pressing plate 231 by driving the connecting plate 233; each pressing plate 231 presses one cell body 310 correspondingly; and a gap is left between adjacent pressing plates 231 so as to avoid interference with the slitting of the slitting device. By driving the air cylinder 232 to extend out, the pressing plate 231 is driven to press down, the pressing plate 231 presses the corresponding cell body 310 tightly on the cell support table 220, and each cell body 310 is correspondingly provided with one pressing plate 231 to press and position the same; and when the slitting device is slitting, since each cell body 310 is pressed by the pressing plate 231, the cell body 310 is kept fixed, so that the slitting device can align with a pre-set slitting line to perform slitting, avoiding deviation during slitting, reducing a defect rate and improving reliability.

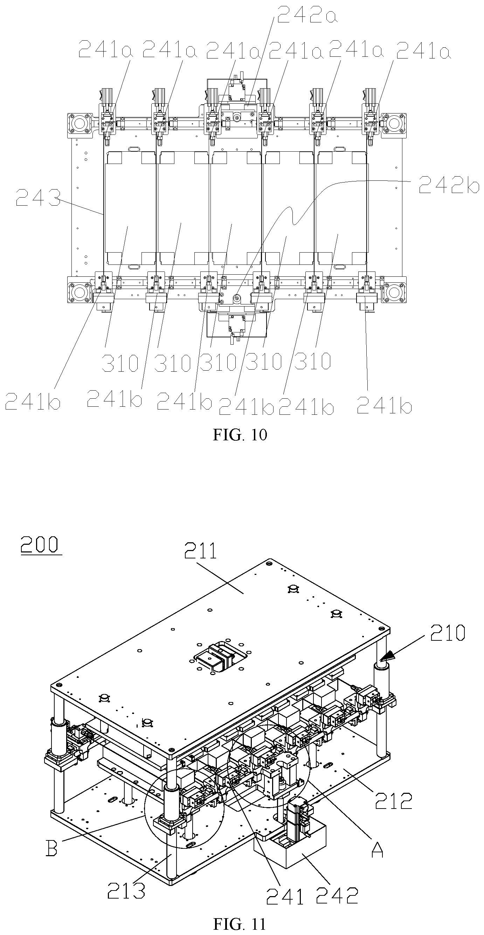

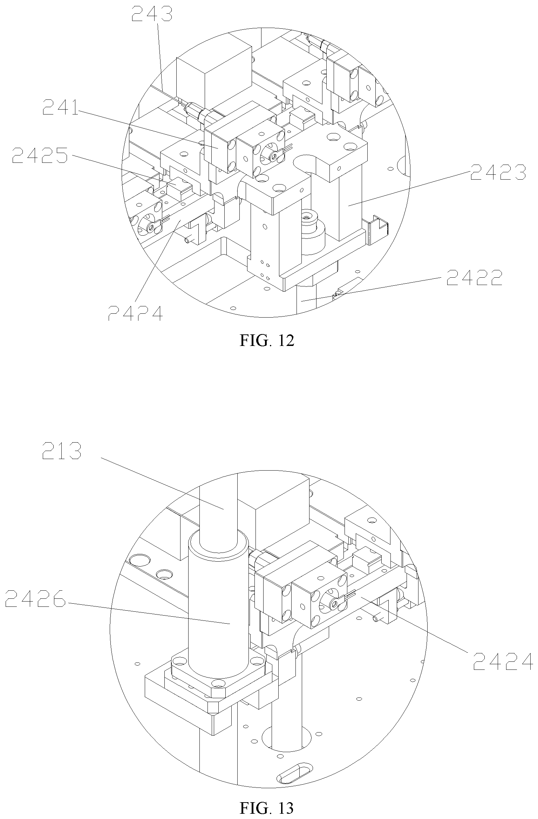

With reference to Figs. 11 to 13, in one embodiment, the lifting and lowering driving module comprises two sets of die bases 241 arranged oppositely and two lifting and lowering driving assemblies 242, wherein each set of die bases 241 comprises multiple die bases 241, the thermal cutting wire 243 is connected between the two die bases 241 arranged directly facing each other, and the two lifting and lowering driving assemblies 242 respectively drive the two sets of the die bases to lift and lower synchronously so as to drive the thermal cutting wire 243 to lift and lower. Specifically, the two sets of die bases 241 are respectively a first set of die bases 241a and a second set of die bases 241b, the two lifting and lowering driving assemblies 242 are respectively a first lifting and lowering driving assembly 242a and a second lifting and lowering driving assembly 242b, the first set of die bases 241a and the first lifting and lowering driving assembly 242a are located on one side of the rectangular body support frame, and the second set of die bases 241b and the second lifting and lowering driving assembly 242b are located on the other side of the rectangular body support frame, so that the first set of die bases 241a and the second set of die bases 241b are oppositely arranged. The first set of die bases 241a and the second set of die bases 241b each include multiple die bases 241, and the number of die bases 241 of the first set of die bases 241a is equal to the number of those of the second set of die bases 241b. The die bases 241 in the first set of die bases 241a and the die bases 241 in the second set of die bases 241b are arranged in a one-to-one directly-facing-each-other arrangement, two of the directly-facing-each-other die bases 241 constitute one pair of die bases 241, and a thermal cutting wire 243 is connected between one pair of die bases 241. As shown in Fig. 12, the lifting and lowering driving assembly 242 comprises a motor 2421, a lead screw 2422, a lifting platform 2423, and a connecting rod 2424, wherein the motor 2421 is connected to the lead screw 2422, the lead screw 2422 is connected to the lifting platform 2423, and the motor 2421 drives the lead screw 2422 to rotate so as to drive the lifting platform 2423 to lift and lower. The lifting platform 2423 is fixed to the connecting rod 2424, and the connecting rod 2424 is mounted with a die base 241, thereby driving the die base 241 to lift and lower, so that the thermal cutting wire 243 on the module can complete the slitting action. Multiple die bases 241 of the first set of die bases 241a are respectively connected to the connecting rod 2424 of the first lifting and lowering driving assembly 242a, and multiple die bases 241 of the second set of die bases 241b are respectively connected to the connecting rod 2424 of the second lifting and lowering driving assembly 242b. A guide rail 2425 is further provided on the connecting rod 2424, and the die base 241 is mounted on the guide rail 2425, and the die base 241 can slide along the guide rail 2425 so as to adjust the position of the die base 241. The distance between adjacent thermal cutting wires 243 is fixed, and the distance between two adjacent thermal cutting wires 243 is equal to the distance between pre-set slitting lines. For example, there are two pre-set slitting lines. The distance between the two pre-set slitting lines is 10mm, then the distance between the two adjacent thermal cutting wires 243 is also 10mm, and the two remain corresponding to each other. As shown in Fig. 13, in order to ensure the stability of the lifting and lowering of the die base 241, two ends of the connecting rod 2424 are also slidably connected to the guide post 213 of the support frame of the rectangular body. Specifically, the guide post 213 of the support frame of the rectangular body is provided with a connecting bracket upper plate 211 and a bracket bottom plate 212, two ends of the connecting rod 2424 are respectively provided with guide sleeves 2426, and the guide sleeves 2426 are sleeved on the guide post 213 and slide along the guide post 213, so that the connecting rod 2424 slides along the guide post 213, ensuring the stability of the lifting and lowering of the die base 241, and avoiding slitting deviation. As shown in Fig. 10, the pre-set slitting lines in the present embodiment are four vertical slitting lines 501, and four pairs of die bases 241 are also provided; when slitting is performed, firstly, the air cylinder 232 drives four pressing plates 231 to press down, respectively tightly pressing four connected cell bodies 310 of the lamination unit 300; the motor 2421 drives the lifting platform 2423 to move upwards via the lead screw 2422; the lifting platform 2423 drives the die base 241 to move upwards via the connecting rod 2424; and specifically, the connecting rod 2424 drives the four die bases 241 to move upwards from the lower side of the lamination unit 300, from low to high, pass through the vertical slitting lines 501, and travel to the upper side of the lamination unit 300. Therefore, the lifting and lowering movement of the plurality of die bases 241 is achieved while multiple layers of membranes 400 of the connected cell bodies 310 are cut, thereby improving the slitting efficiency.

## Claims

1. A cell slitting method, **characterized in that** the method comprises:
controlling a pressing plate to tightly press a lamination unit on a cell support table, wherein the lamination unit comprises m×n positive pole pieces and m×n negative pole pieces and a membrane,
m×n positive pole pieces and m×n negative pole pieces are alternately stacked on a continuously coated membrane, m×n positive pole pieces and m×n negative pole pieces are distributed according to m rows and n columns, and m×n cell bodies are formed in a stacking direction, wherein m is a positive integer greater than or equal to 1, and n is a positive integer greater than or equal to 2; and
controlling the slitting device to slit multiple layers of membranes of the lamination unit according to a pre-set slitting line to obtain m×n independent cell bodies.

2. The method according to claim 1, **characterized in that** the pre-set slitting line comprises j vertical slitting lines between left and right adjacent cell bodies, wherein j=n-1.

3. The method according to claim 2, **characterized in that** the pre-set slitting line comprises k transverse slitting lines between upper and lower adjacent cell bodies, wherein k=m-1.

4. The method according to any one of claims 1 to 3, **characterized in that** the slitting device is a cold cutting device, and a step of controlling the slitting device to slit multiple layers of membranes of the lamination unit according to a pre-set slitting line to obtain m×n independent cell bodies comprises:
controlling a slitting knife of the cold cutting device to cut off multiple layers of membranes from one side edge of the lamination unit to the other side edge of the lamination unit in translation along the pre-set slitting line so as to slit the lamination unit into m×n independent cell bodies.

5. The method according to claim 4, **characterized in that** after the step of controlling the slitting device to slit multiple layers of membranes of the lamination unit according to a pre-set slitting line to obtain m×n independent cell bodies, the method comprises:
packaging the membranes on side margins of the cell bodies.

6. The method according to any one of claims 1 to 3, **characterized in that** the slitting device is a thermal cutting device, and a step of controlling the slitting device to slit multiple layers of membranes of the lamination unit according to a pre-set slitting line to obtain m×n independent cell bodies comprises:
controlling a thermal cutting wire of the thermal cutting device to move from a lower side of the lamination unit up to an upper side of the lamination unit along the pre-set slitting line to cut off multiple layers of membranes to slit the lamination unit into m×n independent cell bodies.

7. A slitting device, **characterized by** being applied to the cell slitting method according to any one of claims 1 to 6, wherein the slitting device is a cold cutting device, and the cold cutting device comprises:
a machine frame;
a cell support table provided on the machine frame, wherein the cell support table is used for placing a lamination unit;
a positioning mechanism provided on the machine frame, wherein the positioning mechanism comprises a pressing plate, and the positioning mechanism is used for driving the pressing plate to tightly press the lamination unit on the cell support table; and
a cold cutting mechanism provided on the machine frame, wherein the cold cutting mechanism comprises a slitting knife and a translation driving module, and the translation driving module is used for driving the slitting knife to perform a translation movement.

8. The slitting device according to claim 7, **characterized in that** the translation driving module comprises a sliding rail and a sliding seat, multiple the slitting knives are mounted on the sliding seat, and the sliding seat slides along the sliding rail to drive the slitting knives to translate.

9. A slitting device, **characterized by** being applied to the cell slitting method according to any one of claims 1 to 6, wherein the slitting device is a thermal cutting device, and the thermal cutting device comprises:
a machine frame;
a cell support table provided on the machine frame, wherein the cell support table is used for placing a lamination unit;
a positioning mechanism provided on the machine frame, wherein the positioning mechanism comprises a pressing plate, and the positioning mechanism is used for driving the pressing plate to tightly press the lamination unit on the cell support table; and
a thermal cutting mechanism provided on the machine frame, wherein the thermal cutting mechanism comprises a thermal cutting wire and a lifting and lowering driving module, and the lifting and lowering driving module is used for driving the thermal cutting wire to perform lifting and lowering movement.

10. The slitting device according to claim 9, **characterized in that** the lifting and lowering driving module comprises two sets of die bases arranged oppositely and two lifting and lowering driving assemblies, each set of die bases comprising a plurality of the die bases, the thermal cutting wire being connected between two of the die bases arranged directly facing each other, and the two lifting and lowering driving assemblies respectively driving two sets of the die bases to lift and lower synchronously so as to drive the thermal cutting wire to lift and lower.
